# FASCICULE DE BREVET EUROPEEN

(11) **EP 2 630 219 B1**
(45) Date de publication et mention de la délivrance du brevet: **29.08.2018**
(21) Numéro de dépôt: 11832109.0
(22) Date de dépôt: 13.10.2011
(51) Int. Cl.: C10J 3/46, C10J 3/48, F03G 6/06, B01J 19/12, F28D 13/00, B01J 8/32, F22B 1/00, C09K 5/14, C09K 5/10, B01J 8/18, B01J 8/38, F28D 20/00

(54) **DISPOSITIF COLLECTEUR D'ÉNERGIE SOLAIRE**
VORRICHTUNG ZUR SAMMLUNG VON SONNENENERGIE
DEVICE FOR COLLECTING SOLAR ENERGY

(30) Priorité: 20.10.2010 FR 1058565
(43) Date de publication de la demande: 28.08.2013
(73) Titulaire: Centre National de la Recherche Scientifique, 75016 Paris (FR); Institut National Polytechnique de Toulouse, 31029 Toulouse (FR)
(72) Inventeur: FLAMANT, Gilles, F-66800 Llo (FR); HEMATI, Mehrdji, F-31860 Pins-Justaret (FR)
(74) Mandataire: LLR
(86) Numéro de dépôt international: PCT/FR2011/052386
(87) Numéro de publication internationale: WO 2012/052661

(56) Documents cités:
- WO-A1-03/049853
- DE-A1- 10 208 487
- US-A- 4 290 779
- US-A1- 2010 237 291

## Description

La présente invention a pour objet un dispositif collecteur d'énergie solaire. Elle concerne en particulier un récepteur solaire adapté à la réception d' au moins une suspension dense de particules fluidisées par un gaz et un procédé de stockage d'énergie solaire. L'exploitation rationnelle de l'énergie solaire nécessite le stockage d'une partie de la chaleur produite aux heures d'ensoleillement pour pouvoir la restituer aux heures de consommation, ou tout au moins pour assurer la continuité du fonctionnement pendant les passages nuageux.

Le document US 4 290 779 décrit un système de gazéification de matière carbonée en utilisant l'énergie solaire.

Le document DE 102 08 487 décrit collecteur d'énergie solaire utilisant du sable comme moyen de transfert d'énergie thermique ou comme moyen de stockage. Dans la configuration de ce document, la suspension de particules solides fluidisées n'est formée que dans le récepteur solaire. Le document WO03/049853 décrit un collecteur d'énergie solaire permettant de chauffer des particules réactives et de réaliser ainsi des réactions chimiques entrainant la production de gaz.

Pour le stockage de la chaleur, il est connu d'utiliser le même fluide que celui mis en oeuvre comme fluide de transfert thermique (par exemple un sel fondu).

On peut ainsi utiliser de la vapeur comme fluide de transfert thermique. Cette solution a toutefois pour inconvénient une température de fonctionnement limitée.

On peut également utiliser comme fluide de transfert thermique des huiles de synthèse ou des mélanges de sels fondus, et notamment les mélanges de nitrate de potassium et de nitrate de sodium. L'utilisation d'huiles de synthèses ou de sels fondus a pour inconvénient d'être dangereuse et de présenter une toxicité élevée.

On a ainsi pensé à utiliser des suspensions de particules solides pour absorber le rayonnement solaire, mais cette solution n'a pas été satisfaisante, notamment en raison de la faible densité des suspensions réalisée et des pertes d'énergie importantes liées à la compression de l'air nécessaire à la mise en suspension.

La présente invention vise à remédier à ces inconvénients.

Elle propose en particulier un dispositif collecteur d'énergie solaire utilisant un fluide non toxique et non dangereux et qui permet de transporter des quantités de chaleur élevées.

L'invention a ainsi pour objet un dispositif collecteur d'énergie solaire.

Le dispositif selon l'invention, défini par la revendication indépendante 10 et comprenant au moins toutes les caractéristiques de cette revendication, comprend au moins un récepteur solaire étant adapté à la réception d' au moins une suspension de particules solides fluidisées par un gaz, chaque suspension circulant entre une entrée et une sortie du récepteur, le volume des particules étant compris entre 40 et 55% du volume de la suspension, la taille moyenne des particules étant comprise entre 20 et 150 µm.

Le volume des particules peut être compris entre 45 et 50% du volume de la suspension.

La masse volumique de la suspension peut être comprise entre 1250 et 2000 kg/m³.

Les particules peuvent être des particules inertes de sable, de carbure de silicium, d'alumine, des particules métalliques, des particules d'oxydes, de carbures ou de nitrures métalliques ou des particules réactives.

Dans le cas où les particules sont des particules réactives, le récepteur solaire peut être également un réacteur dans lequel se produit un traitement thermique du solide ou une réaction solide-gaz telle que le séchage, la déshydratation, la décomposition, la décarbonatation ou la réduction.

Les particules peuvent être un mélange de particules inertes chimiquement et de particules réactives et le récepteur solaire peut être également un réacteur dans lequel se produit une réaction de valorisation de produits organiques telle que pyrolyse et gazéification.

Le débit des particules solides est avantageusement compris entre 18 et 200 kg.m⁻².s⁻¹.

Chaque suspension peut être confinée dans un ou plusieurs tubes.

Chaque tube peut être un tube opaque en matériau métallique ou céramique.

Chaque suspension de particules fluidisées peut être en écoulement vertical ascendant ou descendant.

Le dispositif peut comprendre un élément de stockage destiné à stocker les particules chauffées issues du récepteur solaire, ledit élément de stockage alimentant un échangeur de chaleur à lit fluidisé.

L'échangeur de chaleur à lit fluidisé peut alimenter en vapeur une turbine à vapeur.

L'échangeur de chaleur à lit fluidisé peut alimenter une turbine à gaz.

L'invention a également pour objet l'utilisation d'un dispositif décrit ci-dessus pour une hybridation entre énergie solaire et biomasse.

L'invention a également pour objet un procédé de stockage d'énergie solaire, défini par la revendication indépendante 1 et comprenant au moins toutes les étapes décrites par cette revendication. Le procédé selon l'invention comprend une étape de mise en oeuvre, dans un récepteur solaire, d'au moins une suspension de particules solides fluidisées par un gaz, chaque suspension circulant entre une entrée et une sortie du récepteur, le volume des particules étant compris entre 40 et 55% du volume de la suspension, la taille moyenne des particules étant comprise entre 20 et 150 µm.

Le procédé peut être mis en oeuvre dans un dispositif décrit ci-dessus.

D'autres caractéristiques et avantages de la présente invention apparaîtront plus clairement à la lecture de la description suivante donnée à titre d'exemple illustratif et non limitatif et faite en référence aux dessins annexés sur lesquels :
- la figure 1 illustre schématiquement un dispositif collecteur d'énergie solaire selon l'invention, mettant en oeuvre des particules comme fluide de transfert et comme matériau de stockage de la chaleur,
- la figure 2 illustre un dispositif selon un premier mode de réalisation,
- la figure 3 illustre un dispositif selon un deuxième mode de réalisation, et
- les figures 4 et 5 illustrent les possibilités de mise en oeuvre du dispositif dans un récepteur solaire.

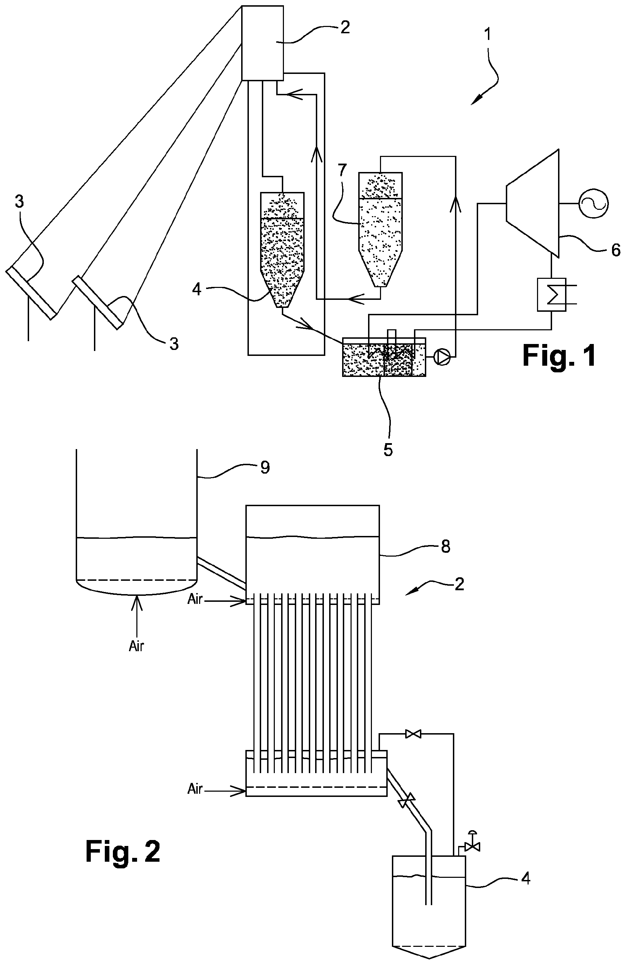

Le dispositif 1, tel qu'illustré à la figure 1, comprend un récepteur solaire 2 utilisant des suspensions denses de particules dans un gaz en écoulement vertical, ascendant ou descendant, dans des tubes qui constituent les éléments actifs du récepteur 2. Ces tubes, métalliques ou céramiques, sont soumis à un rayonnement solaire concentré à l'aide de moyens de concentration 3, par exemple à l'aide d'un champ d'héliostats.

Le rayonnement absorbé par les tubes est transmis par conduction vers la suspension qui s'échauffe au contact des parois chaudes. Cette suspension circule entre l'entrée et la sortie du récepteur solaire 2 et assure ainsi le transport de l'énergie absorbée vers un ensemble de stockage et de conversion d'énergie. Cet ensemble de « stockage-conversion » comprend un élément 4 de stockage chaud connecté à la sortie du récepteur solaire 2. L'élément 4 de stockage chaud est destiné à stocker les particules chauffées issues du récepteur solaire 2 et peut alimenter un échangeur de chaleur 5 à lit fluidisé dans lequel les particules cèdent leur énergie à des tubes immergés dans lesquels est chauffé un fluide de travail, par exemple de la vapeur, cette vapeur pouvant être détendue dans une turbine à vapeur 6. Le fluide de travail peut également être un gaz, dans ce cas on utilisera une turbine à gaz. Une turbine est un dispositif classique de production d'électricité.

Les particules refroidies sont évacuées de l'échangeur 5, les particules circulant de manière continue, et sont dirigées vers un élément 7 de stockage froid qui est connecté à l'entrée du récepteur solaire 2.

La suspension de particules utilisée dans le récepteur solaire 2 est mise en mouvement par un gaz dans un tube ou tout autre contenant équivalent.

La taille moyenne des particules de la suspension est comprise entre 20 et 150 µm. On peut par exemple utiliser des particules du groupe A de la classification de Geldart. La taille moyenne des particules peut par exemple être déterminée par granulométrie laser.

La taille moyenne des particules est suffisamment petite pour éviter une fluidisation hétérogène, et suffisamment grande pour éviter la formation d'agrégats et une mauvaise fluidisation. Cette taille moyenne de particules permet en outre de réaliser la mise en fluidisation de la suspension avec des vitesses de gaz faibles, de l'ordre de quelques cm/s. Cette propriété constitue un avantage par rapport aux solutions classiques de mise en suspension des particules par lit circulant qui nécessitent des vitesses de gaz de l'ordre de plusieurs m/s, car la dépense énergétique due à la compression du gaz est réduite.

Il s'agit d'une suspension dense de particules, c'est-à-dire dont la porosité est égale à celle au minimum de fluidisation, et qui est comprise entre 40 et 55%, et de préférence entre 45 et 50%. La porosité est suffisamment petite pour fluidiser les particules et suffisamment grande pour éviter la formation d'un lit dilué avec un transport de chaleur et un échange thermique avec la paroi faibles.

Dans ces conditions, la masse volumique de la suspension est avantageusement comprise entre 1250 et 2000 kg/m³. Par exemple, la masse volumique du sable étant de 2500 kg/m³, une suspension de particules de sable ayant une porosité de 50% aura une masse volumique de 1250 kg/m³, soit une masse volumique environ 1000 fois supérieure à celle de l'air à pression atmosphérique. En conséquence, la quasi-totalité de l'énergie est transportée par le solide et le milieu possède les propriétés d'un quasi-liquide.

Le débit des particules solides est avantageusement compris entre 18 et 200 kg.m⁻².s⁻¹. Il est ainsi suffisamment petit pour procurer une bonne conduction et pour éviter les pertes de charge liées à la puissance de pompage de l'air, et suffisamment grand pour éviter la surchauffe des tubes et ainsi sécuriser le dispositif.

Le coefficient d'échange local entre la paroi recevant le rayonnement solaire concentré et la suspension de particules peut être de l'ordre de 500 à 1000 W.m⁻².°C⁻¹, soit un coefficient environ 10 fois supérieur au coefficient d'échange entre un gaz et une paroi et du même ordre de grandeur que celui entre un liquide et une paroi.

Le récepteur solaire 2 peut comprendre un ou plusieurs échangeurs multitubulaires qui sont les modules absorbeurs du récepteur 2. Les parois des tubes dont le diamètre est par exemple compris entre 30 mm et 100 mm sont chauffées par le rayonnement solaire alors qu'à l'intérieur des tubes circule la suspension dense de particules solides. Les rangées des tubes peuvent être remplacées par des lits fluidisés de forme parallélépipède de faible épaisseur.

Deux configurations pour la réalisation du récepteur solaire 2 sont envisageables.

Dans un premier mode de réalisation, la suspension est en écoulement vertical descendant. Suivant les conditions opératoires envisagées, deux régimes d'écoulement de la suspension gaz-solide peuvent être observés : un échangeur à écoulement dense descendant fluidisé ou un lit mobile.

Ce premier mode de réalisation est illustré à la figure 2, sur laquelle les éléments identiques à ceux de la figure 1 portent les mêmes références. A l'entrée du récepteur 2, un bac tampon fluidisé 8 alimente un faisceau de tubes. En sortie du récepteur 2, un lit fluidisé récupère les particules solides chaudes avant de les acheminer vers le bac de stockage chaud 4. Le bac tampon 8 est alimenté en particules par un bac d'alimentation 9. Le bac d'alimentation 9 est également fluidisé par de l'air, de manière à créer un mouvement de particules et à homogénéiser la température des particules.

La suspension de particules s'écoule ainsi de haut en bas, depuis le bac tampon 8 vers l'extrémité inférieure du récepteur 2.

Dans cette configuration, le débit des particules solides ainsi que le débit résiduel de l'air dans les tubes sont contrôlés grâce au réglage de la pression dans le bac de stockage chaud 4. Suivant la valeur de la vitesse de glissement locale, qui est la différence entre la vitesse des particules et la vitesse du gaz, on peut réaliser l'opération en :
- lit mobile (vitesse de glissement < vitesse minimale de fluidisation),
- écoulements denses descendants fluidisés homogènes (vitesse minimale de fluidisation < vitesse de glissement < vitesse minimale de bullage),
- écoulements denses descendants fluidisés à bulles (vitesse de glissement > vitesse minimale de bullage).

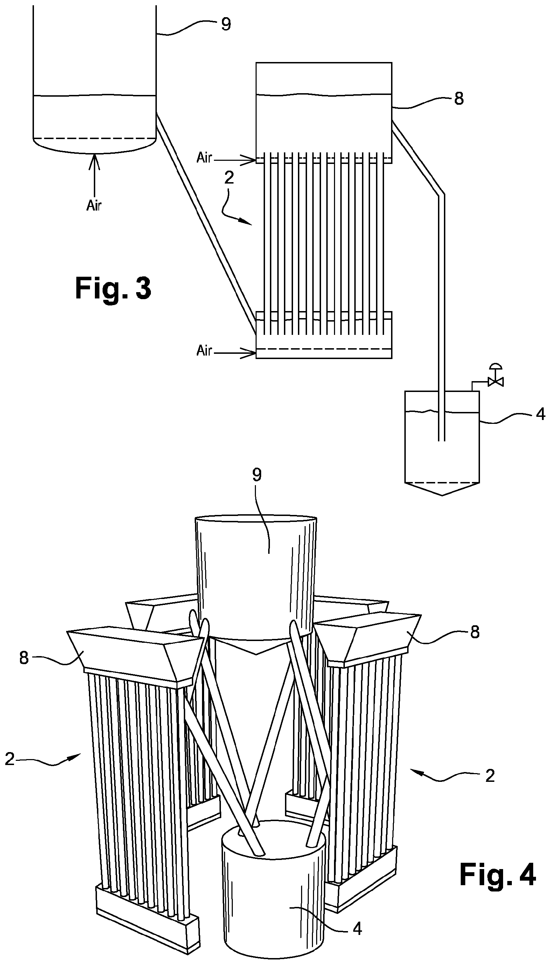

Dans un deuxième mode de réalisation, tel qu'illustré à la figure 3, la suspension est en écoulement vertical ascendant. Les particules circulent depuis le bac d'alimentation 9 en direction du lit fluidisé situé à l'extrémité inférieure du récepteur solaire 2, puis remontent dans les tubes du récepteur 2 en direction du bac tampon 8 situé à l'extrémité supérieure du récepteur 2. Les particules chauffées dans le récepteur 2 circulent ensuite depuis le bac tampon 8 jusqu'au bac de stockage chaud 4 situé sous le récepteur 2.

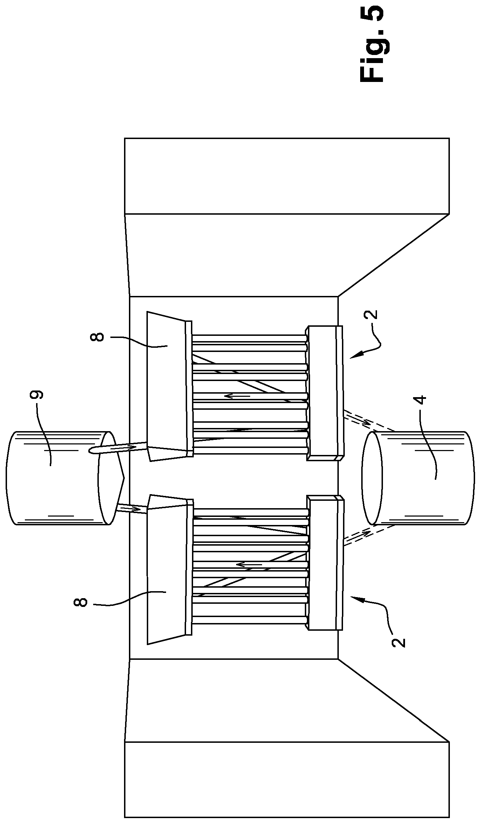

La figure 4 montre la mise en oeuvre du dispositif dans un récepteur solaire, par exemple selon le premier mode de réalisation (il peut également être adapté au second mode). Le dispositif 1 peut ainsi comprendre quatre modules récepteurs solaires 2, alimentés par un unique bac d'alimentation 9. Les particules réchauffées par les récepteurs solaires 2 sont acheminées vers un unique bac de stockage chaud 4. Les récepteurs solaires 2 peuvent être éclairés par un champ d'héliostats circulaire ou nord-sud (récepteur de type cavité) comme illustré sur la figure 5.

Ainsi, conformément à l'invention, les suspensions denses de particules solides fluidisées par un gaz permettent des températures de fonctionnement élevées, supérieures ou égales à 600°C, idéales pour les centrales et réacteurs solaires de production d'électricité ou de chaleur, ainsi que pour le chauffage solaire de réacteurs chimiques pour la production, par exemple, d'hydrogène.

Le dispositif selon l'invention présente ainsi de nombreux avantages :
- maîtriser la consommation parasite d'énergie de compression d'air nécessaire à la mise en suspension,
- opérer à des températures supérieures à celles des fluides de transfert classiques tels que les sels fondus ou la vapeur dont la température limite d'utilisation est d'environ 550°C,
- utiliser un quasi fluide non toxique et non dangereux par rapport aux fluides de transfert utilisés classiquement dans les centrales solaires, comme les huiles de synthèse et les sels fondus qui sont respectivement inflammables et comburants,
- mettre en oeuvre un milieu pouvant servir à la fois de fluide de transfert et de matériau de stockage.

Le dispositif selon l'invention permet en outre de réaliser aisément une hybridation entre énergie solaire et biomasse à travers un échangeur/réacteur à lit fluidisé mis en oeuvre pour produire de la vapeur.

De plus, de telles suspensions peuvent aussi servir à chauffer un réacteur chimique dans lequel sont réalisées des réactions endothermiques, tels que des cycles thermochimiques de production d'hydrogène par voie solaire ou le traitement de solides.

## Revendications

1. Procédé de stockage d'énergie solaire, comprenant une étape de mise en oeuvre, dans un récepteur solaire (2), d'au moins une suspension de particules solides fluidisées par un gaz, chaque suspension circulant entre une entrée et une sortie du récepteur (2), le volume des particules étant compris entre 40 et 55% du volume de la suspension, la taille moyenne des particules étant comprise entre 20 et 150 µm.

2. Procédé selon la revendication 1, **caractérisé en ce que** l'étape de mise en oeuvre est réalisée avec un volume des particules compris entre 45 et 50% du volume de la suspension.

3. Procédé selon la revendication 1 ou 2, **caractérisé en ce que** l'étape de mise en oeuvre est réalisée avec une suspension dont la masse volumique est comprise entre 1250 et 2000 kg/m³.

4. Procédé selon l'une quelconque des revendications 1 à 3, **caractérisé en ce que** l'étape de mise en oeuvre est réalisée avec des particules choisies parmi des particules inertes de sable, de carbure de silicium, d'alumine, des particules métalliques, des particules d'oxydes, de carbures ou de nitrures métalliques ou des particules réactives.

5. Procédé selon la revendication 4, **caractérisé en ce que** l'étape de mise en oeuvre est réalisée avec des particules réactives et **en ce que** le récepteur solaire (2) est également un réacteur dans lequel se produit un traitement thermique du solide ou une réaction solide-gaz telle que le séchage, la déshydratation, la décomposition, la décarbonatation ou la réduction.

6. Procédé selon la revendication 4, **caractérisé en ce que** l'étape de mise en oeuvre est réalisée avec un mélange de particules inertes chimiquement et de particules réactives et **en ce que** le récepteur solaire (2) est un réacteur dans lequel se produit une réaction de valorisation de produits organiques telle que pyrolyse et gazéification.

7. Procédé selon l'une quelconque des revendications 1 à 6, **caractérisé en ce que** lors de l'étape de mise en oeuvre, le débit des particules solides est compris entre 18 et 200 kg.m⁻².s⁻¹.

8. Procédé selon l'une quelconque des revendications 1 à 7, **caractérisé en ce que** lors de l'étape de mise en oeuvre, chaque suspension est confinée dans un ou plusieurs tubes.

9. Procédé selon l'une quelconque des revendications 1 à 8, **caractérisé en ce que** lors de l'étape de mise en oeuvre, chaque suspension de particules fluidisées est en écoulement vertical ascendant ou descendant.

10. Dispositif (1) collecteur d'énergie solaire, comprenant au moins un récepteur solaire (2) adapté à la réception d'au moins une suspension de particules solides fluidisées par un gaz, chaque suspension circulant entre une entrée et une sortie du récepteur (2), **caractérisé en ce que**
- le volume des particules est compris entre 40 et 55% du volume de la suspension, la taille moyenne des particules est comprise entre 20 et 150 µm, et le débit des particules est compris entre 18 et 200 kg.m⁻².s⁻¹, et
- le dispositif comprend un élément de stockage (4) destiné à stocker les particules chauffées issues du récepteur solaire (2), ledit élément de stockage (4) alimentant un échangeur de chaleur (5) à lit fluidisé.

11. Dispositif (1) selon la revendication 10, **caractérisé en ce que** chaque suspension est confinée dans un ou plusieurs tubes.

12. Dispositif (1) selon la revendication 11, **caractérisé en ce que** chaque tube est un tube opaque en matériau métallique ou céramique.

13. Dispositif (1) selon l'une des revendications 10 à 12, **caractérisé en ce que** chaque suspension de particules fluidisées est en écoulement vertical ascendant ou descendant.

14. Dispositif (1) selon l'une quelconque des revendications 10 à 14, **caractérisé en ce que** l'échangeur de chaleur (5) à lit fluidisé alimente en vapeur une turbine à vapeur (6) ou alimente une turbine à gaz.

15. Utilisation d'un dispositif (1) selon l'une des revendications 10 à 14 ou du procédé selon l'une des revendications 1 à 9, pour une hybridation entre énergie solaire et biomasse.

## Patentansprüche

1. Verfahren zur Speicherung von Solarenergie, umfassend einen Schritt des Einsatzes, in einem Solarempfänger (2), mindestens einer Suspension von durch ein Gas verflüssigten festen Partikeln, wobei jede Suspension zwischen einem Eingang und einem Ausgang des Empfängers (2) zirkuliert, wobei das Volumen der Partikel zwischen 40 und 55 % des Volumens der Suspension beträgt, wobei die durchschnittliche Größe der Partikel zwischen 20 und 150 µm beträgt.

2. Verfahren nach Anspruch 1, **dadurch gekennzeichnet, dass** der Einsatzschritt mit einem Volumen der Partikel zwischen 45 und 50 % des Volumens der Suspension durchgeführt wird.

3. Verfahren nach Anspruch 1 oder 2, **dadurch gekennzeichnet, dass** der Einsatzschritt mit einer Suspension durchgeführt wird, deren volumenbezogene Masse zwischen 1250 und 2000 kg/m³ beträgt.

4. Verfahren nach einem der Ansprüche 1 bis 3, **dadurch gekennzeichnet, dass** der Einsatzschritt mit Partikeln durchgeführt wird, die unter inerten Partikeln von Sand, Siliziumkarbid, Aluminiumoxid, metallischen Partikeln, Partikeln von Oxiden, Metallkarbiden oder -nitriden oder reaktiven Partikeln ausgewählt sind.

5. Verfahren nach Anspruch 4, **dadurch gekennzeichnet, dass** der Einsatzschritt mit reaktiven Partikeln durchgeführt wird, und dass der Solarempfänger (2) auch ein Reaktor ist, in dem eine Wärmebehandlung des Feststoffes oder eine Feststoff-Gas-Reaktion, wie Trocknung, Entwässerung, Zersetzung, Dekarbonisierung oder Reduktion, erfolgt.

6. Verfahren nach Anspruch 4, **dadurch gekennzeichnet, dass** der Einsatzschritt mit einem Gemisch von chemisch inerten Partikeln und reaktiven Partikeln durchgeführt wird, und dass der Solarempfänger (2) ein Reaktor ist, in dem es zu einer Valorisierungsreaktion von organischen Produkten, wie Pyrolyse oder Vergasung, kommt.

7. Verfahren nach einem der Ansprüche 1 bis 6, **dadurch gekennzeichnet, dass** bei dem Einsatzschritt der Durchsatz der festen Partikel zwischen 18 und 200 kg.m⁻².s⁻¹ beträgt.

8. Verfahren nach einem der Ansprüche 1 bis 7, **dadurch gekennzeichnet, dass** bei dem Einsatzschritt jede Suspension in einem oder mehreren Rohren eingeschlossen ist.

9. Verfahren nach einem der Ansprüche 1 bis 8, **dadurch gekennzeichnet, dass** bei dem Einsatzschritt jede Suspension von verflüssigten Partikeln vertikal aufsteigend oder absteigend strömt.

10. Solarenergiekollektor (1), umfassend mindestens einen Solarempfänger (2), der für die Aufnahme mindestens einer Suspension von durch ein Gas verflüssigten festen Partikeln geeignet ist, wobei jede Suspension zwischen einem Eingang und einem Ausgang des Empfängers (2) zirkuliert, **dadurch gekennzeichnet, dass**
- das Volumen der Partikel zwischen 40 und 55 % des Volumens der Suspension beträgt, die durchschnittliche Größe der Partikel zwischen 20 und 150 µm beträgt, und der Durchsatz der Partikel zwischen 18 und 200 kg.m⁻².s⁻¹ beträgt, und
- der Kollektor ein Speicherelement (4) umfasst, das dazu bestimmt ist, die aus dem Solarempfänger (2) kommenden erwärmten Partikel zu speichern, wobei das Speicherelement (4) einen Fließbett-Wärmetauscher (5) versorgt.

11. Vorrichtung (1) nach Anspruch 10, **dadurch gekennzeichnet, dass** jede Suspension in einem oder mehreren Rohren eingeschlossen ist.

12. Vorrichtung (1) nach Anspruch 11, **dadurch gekennzeichnet, dass** jedes Rohr opak aus einem metallischen oder keramischen Material ist.

13. Vorrichtung (1) nach einem der Ansprüche 10 bis 12, **dadurch gekennzeichnet, dass** jede Suspension von verflüssigten Partikeln vertikal aufsteigend oder absteigend strömt.

14. Vorrichtung (1) nach einem der Ansprüche 10 bis 14, **dadurch gekennzeichnet, dass** der Fließbett-Wärmetauscher (5) eine Dampfturbine (6) mit Dampf oder eine Gasturbine versorgt.

15. Verwendung einer Vorrichtung (1) nach einem der Ansprüche 10 bis 14 oder des Verfahrens nach einem der Ansprüche 1 bis 9 für eine Hybridisierung zwischen Solarenergie und Biomasse.

## Claims

1. Process for storing solar energy, comprising a step of processing, in a solar receiver (2), at least one suspension of solid particles fluidized by a gas, each suspension flowing between an inlet and an outlet of the receiver (2), the volume of the particles being between 40 and 55% of the volume of the suspension, the average size of the particles being between 20 and 150 µm.

2. Process according to Claim 1, **characterized in that** the processing step is carried out with a volume of the particles of between 45 and 50% of the volume of the suspension.

3. Process according to Claim 1 or 2, **characterized in that** the processing step is carried out with a suspension that has a density of between 1250 and 2000 kg/m³.

4. Process according to any one of Claims 1 to 3, **characterized in that** the processing step is carried out with particles chosen from inert particles of sand, of silicon carbide or of alumina, metal particles, metal oxide, carbide or nitride particles, or reactive particles.

5. Process according to Claim 4, **characterized in that** the processing step is carried out with reactive particles and **in that** the solar receiver (2) is also a reactor in which a heat treatment of the solid takes place or a solid/gas reaction such as drying, dehydration, decomposition, decarbonization, or reduction takes place.

6. Process according to Claim 4, **characterized in that** the processing step is carried out with a mixture of chemically inert particles and reactive particles, and **in that** the solar receiver (2) is a reactor in which a reaction for upgrading organic products takes place, such as pyrolysis and gasification.

7. Process according to any one of Claims 1 to 6, **characterized in that**, during the processing step, the flow rate of the solid particles is between 18 and 200 kg.m⁻².s⁻¹.

8. Process according to any one of Claims 1 to 7, **characterized in that**, during the processing step, each suspension is confined in one or more tubes.

9. Process according to any one of Claims 1 to 8, **characterized in that**, during the processing step, each suspension of fluidized particles flows vertically upwards or downwards.

10. Device (1) for collecting solar energy, comprising at least one solar receiver (2) suitable for receiving at least one suspension of solid particles fluidized by a gas, each suspension flowing between an inlet and an outlet of the receiver (2), **characterized in that**
- the volume of the particles is between 40 and 55% of the volume of the suspension, the average size of the particles is between 20 and 150 µm, and the flow rate of the particles is between 18 and 200 kg.m⁻².s⁻¹, and
- the device comprises a storage element (4) intended to store the heated particles output by the solar receiver (2), said storage element (4) feeding a fluidized-bed heat exchanger (5).

11. Device (1) according to Claim 10, **characterized in that** each suspension is confined in one or more tubes.

12. Device (1) according to Claim 11, **characterized in that** each tube is an opaque tube made of metal or ceramic material.

13. Device (1) according to one of Claims 10 to 12, **characterized in that** each suspension of fluidized particles flows vertically upwards or downwards.

14. Device (1) according to one of Claims 10 to 14, **characterized in that** the fluidized-bed heat exchanger (5) supplies a steam turbine (6) with steam or supplies a gas turbine.

15. Use of a device (1) according to one of Claims 10 to 14 or of the process according to one of Claims 1 to 9, for hybridization of solar and biomass energy.
